# EUROPÄISCHE PATENTSCHRIFT

(11) **EP 0 431 114 B1**
(45) Veröffentlichungstag und Bekanntmachung des Hinweises auf die Patenterteilung: **03.02.1993**
(21) Anmeldenummer: 90909124.1
(22) Anmeldetag: 21.06.1990
(51) Int. Cl.: G01B 5/00

(54) **FESTSTEHENDES PORTAL FÜR EIN PRÄZISIONS-KOORDINATENMESSGERÄT**
FIXED GANTRY MOUNT FOR A PRECISION COORDINATE-MEASURING INSTRUMENT
PORTIQUE FIXE POUR UN APPAREIL DE MESURE DE COORDONNEES DE HAUTE PRECISION

(30) Priorität: 24.06.1989 DE 3920718
(43) Veröffentlichungstag der Anmeldung: 12.06.1991
(73) Patentinhaber: Leitz Messtechnik Gesellschaft mit beschränkter Haftung, D-35530 Wetzlar (DE)
(72) Erfinder: SCHALZ, Karl-Josef, D-6290 Weilburg (DE); LINDNER, Matthias, D-6350 Bad Nauheim (DE)
(74) Vertreter: Stamer, Harald, Dipl.-Phys.
(86) Internationale Anmeldenummer: DE9000471
(87) Internationale Veröffentlichungsnummer: WO9100493

(56) Entgegenhaltungen:
- DE-A- 3 526 317
- J.- -Ph ysi ol.
- Microtecnic, vol. 20, no. 6, December 1986, F. Zawistowski: "Compensated gauges for big dimensions", pages 612-614
- Measurement Techniques, vol. 20, no. 7, July 1977, V.S. Bogolyubev et al.: "Apparatus to determine coordinates of large curved surfaces", pages 979-982
- Patent Abstracts of Japan, vol. 6, no. 156, (P-135)(1034), 17 August 1982, & JP-A-5773602

## Beschreibung

Die Erfindung betrifft ein feststehendes Portal für ein Präzisions-Koordinatenmeßgerät mit einem Grundkörper, einer ersten und zweiten Stütze und einer Traverse.

Solche Portale sind bekannt (vgl. Prospekt PMM 12106 der Fa. Ernst Leitz Wetzlar GmbH 810-096,1981).

Grundkörper, Stützen und Traverse umrahmen dabei ein Rechteck in der x/z-Ebene, räumlich einen Quader. Herkömmlich werden die Bestandteile so ausgelegt und miteinander verbunden, daß alle Seitenlängen und alle Winkel je einzeln festgelegt sind. Dies bedingt, daß alle Anschlüsse zwischen Grundkörper, Stützen und Traverse flächig ausgebildet sind und diese Flächen hochgenau winklig ausgerichtet sein müssen. Da das Rechteck durch vier Seiten und vier Winkel überbestimmt ist, und damit auch der Quader, bedingen die mit allem Aufwand nicht ausschaltbaren Abweichungen, daß an der vierten Verbindung immer noch Justierhilfen als Verbindungselemente eingesetzt werden müssen.

Bei dieser Bauweise ist also ein hoher Aufwand bei der Teilefertigung und bei der Montage des Portals unumgänglich.

Aus der DE-OS 35 26 317 ist ein Koordinaten-Meßinstrument mit beweglichem Portal bekannt, bei der der Portal-Querträger mit Verstelleinrichtungen und Feststellanschlägen mit den Tragstützen verbunden ist. Die Konstruktion erfordert zahlreiche Präzisionsteile. Die genannte Portalkonstruktion ist geometrisch mehrfach überbestimmt.

Durch die Montage und durch thermische, statische und dynamische mechanische Beanspruchung kommt es bei den bekannten Ausführungen zu Störungen durch Verspannungen und Deformationen. Wegen der steifen Verbindung der Bestandteile übertragen sich diese Störungen stets auf alle Bestandteile der Konstruktion. Sowohl die Vorausbestimmung bei der Konstruktion wie auch die Erfassung der Störungen zur Korrektur im Betrieb wird dadurch außerordentlich erschwert.

Im Stahlbau ist es bekannt, z. B. Kranportale mit einer Pendelstütze zu versehen. Auch Brücken werden mit, zum Teil elastischen, Gelenken ausgestattet, vgl. Handwörterbuch der Technik Koch, Kienzle, DVA Stuttgart + Berlin 1935, S. 310, S. 487 ff. Hierbei sind hohe mechanische und thermische Belastungen maßgebend, die Forderung nach fester Geometrie höchster Präzision, wie sie bei Koordinaten-Meßmaschinen besteht, ist jedoch nicht gegeben.

Es ist Aufgabe der Erfindung, ein gattungsgemäßes Portal anzugeben, das gegenüber bekannten Ausführungen mit erheblich geringerem Aufwand hergestellt werden kann, dessen Gewicht wesentlich reduziert ist, so daß auch der Transportaufwand reduziert und die Aufstellmöglichkeiten erweitert werden, und dessen Verhalten bei störenden Beanspruchungen wesentlich einfacher erfaßt und beschrieben werden kann.

Diese Aufgabe wird bei einem gattungsgemäßen Portal dadurch gelöst, daß drei der vier Verbindungen zwischen Grundkörper, erster und zweiter Stütze und Traverse drehbeweglich ausgeführt sind und die vierte Verbindung biegesteif ist. Die Drehachsen ligen weitgehend senkrecht zur Ebene des von den Portalteilen ausgespannten Vierecks.
Vorteilhafte Ausgestaltungen sind Gegenstand der abhängigen Ansprüche 2 bis 9.

Die Erfindung geht aus von der Erkenntnis, daß die Probleme bei der bekannten Ausführung der Portale aus der eingangs beschriebenen und als unvermeidbar angesehenen Überbestimmung des gebildeten Rechtecks bzw. Quaders resultieren.

Die Lösung wird erreicht durch eine Konstruktion, bei der das gebildete Rechteck durch vier Seiten und nur einen Winkel eindeutig festgelegt wird. Die Konstruktion ist dann statisch bestimmt.

Anhand der Zeichnung wird die Erfindung näher erläutert.
Fig. 1 zeigt eine Grundform,
Fig. 2 zeigt eine weitere Ausführung.

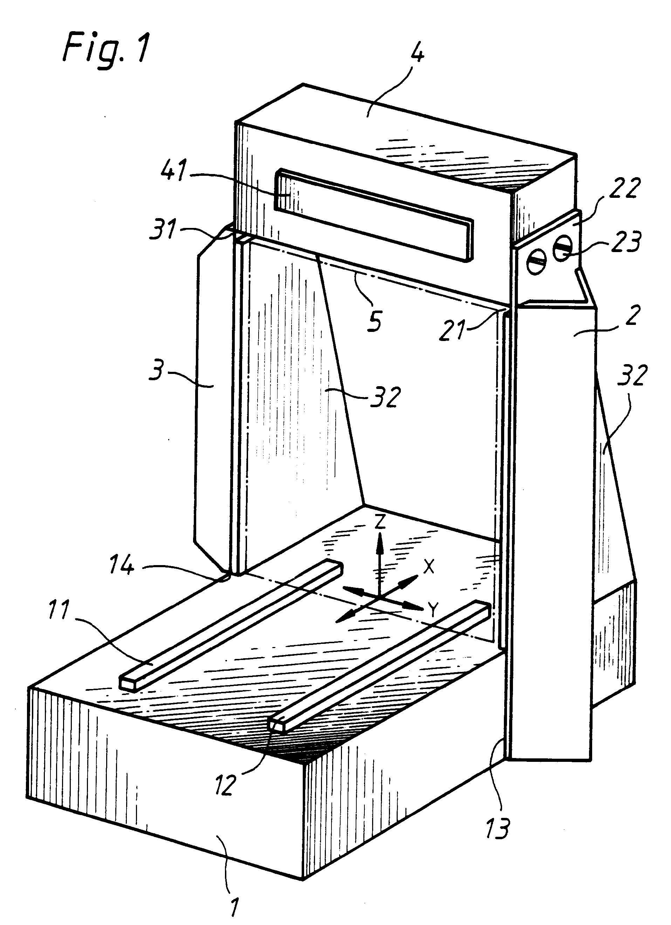

Fig. 1 zeigt eine Ansicht eines feststehenden Portals für ein Präzisions-Koordinatenmeßgerät, das aus einem Grundkörper 1, einer ersten Stütze 2, einer zweiten Stütze 3 und einer Traverse 4 besteht.

Der Grundkörper 1 weist in bekannter Ausführung Führungsbahnen 11, 12 für einen nicht dargestellten in x-Richtung verfahrbaren Meßobjektträger auf. Die Traverse 4 hat eine ebenfalls bekannte Führungsbahn 41 für einen nicht dargestellten y-Schlitten, an dem wiederum eine bewegliche z-Pinole mit Tastkopf angebracht werden kann.

Die Verbindung 13 von Grundkörper 1 und erster Stütze 2 ist im Prinzip in bekannter Weise, insbesondere starr und biegesteif, ausgeführt. Gegenüber bekannten Ausführungen kann aber schon hier der Fertigungsaufwand reduziert werden, da die Passung von Grundkörper 1 und erster Stütze 2 an der Verbindung 13 nicht präzise zu den anderen Verbindungen der Portalteile ausgerichtet sein muß.

Die Verbindung 14 vom Grundkörper 1 zur zweiten Stütze 3, wie auch die Verbindungen 21 und 31 zwischen erster Stütze 2 bzw. zweiter Stütze 3 und Traverse 4 sind drehbeweglich ausgeführt. Die Drehachsen dieser Verbindungen 14,21,31 liegen dabei weitgehend senkrecht zur Ebene des Vierecks 5, das von den Portalteilen 1,2,3,4, aufgespannt wird, bzw. parallel zu der von den Führungsbahnen 11, 12 aufgespannten Ebene.

Die drehbeweglichen Verbindungen 14,21,31 können in der Art von Scharnieren ausgeführt werden.

Besonders vorteilhaft ist jedoch die Ausführung als biegeelastisches Verbindungselement, insbesondere als einfache Laschenverbindung 22, wie am Beispiel der Verbindung 21 in der Zeichnung dargestellt ist. Das ist möglich, da nur geringste Verdrehwinkel vorkommen. Dies bringt eine weitere Vereinfachung der Konstruktion. Die Herstellung der Scharnierteile entfällt. Ebenso entfällt die Ausrichtung der Scharnierteile entsprechend der gewünschten Drehachse. In der Laschenverbindung 22 stellt sich die Drehachse entsprechend der Beanspruchung der Verbindung selbständig ein.

Die Laschen 22 können als einfache Fortsätze der Stützen 2,3 oder der Traverse 4 ausgebildet sein, insbesondere wenn diese als Kastenhohlträger in Blechschweißkonstruktion ausgebildet sind.

Die Montage kann dann durch Schraubverbindungen 23 zwischen Traverse 4 und Lasche 22 an der Stütze 2 erfolgen.

Durch Langlöcher an den Schraubverbindungen 23 ergibt sich eine einfache Justierung.

Zur Montage kann durch ein Lehrgerüst die Lage der Führungsbahn 41 an der Traverse 4 gegenüber den Führungsbahnen 11 und 12 auf dem Grundkörper 1 festgelgt werden. In dieser Lage werden dann die Verbindungen 21 und 31 hergestellt, insbesondere durch Verschrauben 23 der Laschen 22.

Da an den Stützen 2 und 3 und der Traverse 4 durch Einführung der Gelenkverbindungen 14,21,31 nicht mehr in den Endbereichen der Balkenstrukturen hochgenaue, zueinander präzise ausgerichtete Flächen bearbeitet werden müssen und da die hohen Belastungen bei der Bearbeitung nicht mehr auftreten, können die Anforderungen an die Steifigkeit der Teile reduziert werden. Dadurch ist der Übergang zu einem Leichtbau mit Schweißkonstruktionen von Kastenhohlträgern aus Blechen möglich. Die Stützen 2,3 sind dann z.B. als dreieckige Hohlprofilträger mit einer trapezförmigen Aussteifung 32 gegen Deformationen in x-Richtung ausgeführt.

Der Grundkörper 1, die Stützen 2,3 und die Traverse 4 unterliegen als mechanische Strukturen Deformationen durch statische und dynamische Belastungen und durch Temperatureinflüsse, welche sich auf das ganze Portal übertragen und zu Verlagerungen und somit Meßfehlern der Tastspitze gegenüber dem Meßobjekt auf dem Präzisions-Koordinatenmeßgerät führen. Es ist daher bekannt, daß diese Störungen durch Konstruktion und Materialauswahl auf ein Minimum reduziert werden müssen. Bei der beschriebenen Konstruktion kann dazu z.B. eine Verfüllung mit Polymerbeton nützlich sein.

Steigern läßt sich dann die Meßgenauigkeit noch dadurch, daß die restlichen Störungen und Deformationen erfaßt werden und über Modellrechnungen oder experimentelle Datensätze Korrekturen der Meßwerte ermittelt werden.

Dabei hat die hier dargestellte Portalkonstruktion mit drei Gelenkverbindungen den beträchtlichen Vorteil, daß die einzelnen Bauteile, Grundkörper 1 mit erster Stütze 2, zweite Stütze 3 und Traverse 4 derart entkoppelt sind, daß die Deformationen für jedes Bauteil einzeln bestimmt und dann einfach additiv zum Gesamteffekt vereinigt werden können.

Nimmt beispielsweise die Traverse 4 eine höhere Temperatur an als die restlichen Bauteile 1,2,3 dann bewirkt dies eine Längenausdehnung. Dadurch wird lediglich die zweite Stütze 3 seitwärts ausgelenkt. Weder die zweite Stütze 3 noch die Traverse 4 werden verbogen. Da keine Rückstellkraft von der zweiten Stütze 3 auf die Traverse 4 wirkt, kann auch auf die erste, starr mit dem Grundkörper 1 verbundene Stütze 2 keine Kraft ausgeübt werden, so daß auch diese nicht deformiert wird.

Der Temperaturanstieg in der Traverse 4 bewirkt damit nur eine einfache lineare Verschiebung des Tasters in y-Richtung, die leicht korrigiert werden kann.

In der Fig. 1 sind Grundkörper 1, Stützen 2,3 und Traverse 4 im wesentlichen als prismatische Säulen bzw. Balken ausgeführt und die drehbewglichen Verbindungen liegen in den Ecken eines von diesen aufgespannten Rechtecks. Die Erfindung ist jedoch nicht auf eine solche Ausführung beschränkt.

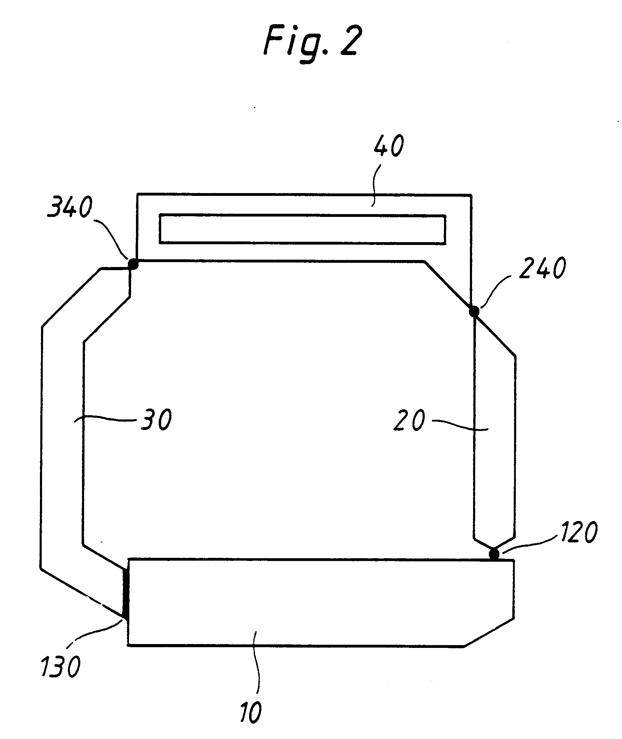

Fig. 2 zeigt, daß die Teile 10, 20, 30 und 40 gekrümmt, geknickt oder gekröpft sein können, die davon aufgespannte Querschnittsfläche kann vom Rechteck hinsichtlich Zahl und Winkel der Ecken deutlich abweichen, und die drehbeweglichen Verbindungen 120, 240 und 340 können in der Grundstellung andere Winkel als 90°, z.B auch 135° und 180°, bilden. Entsprechendes gilt für die starre Verbindung 130.

Die drehbeweglichen Verbindungen 120 und 240 sind als Kugelgelenke oder zweiachsige Drehgelenke ausgebildet, so daß die Konstruktion auch räumlich nicht mehr überbestimmt ist und damit z.B. auch eine Torsionsbelastung der Traverse 40 um die y-Achse durch Montagefehler oder Wärmeausdehnung ausgeschlossen ist.

## Patentansprüche

1. Feststehendes Portal für ein Präzisions-Koordinatenmeßgerät mit einem Grundkörper (1), einer ersten (2) und einer zweiten (3) Stütze und einer Traverse (4), **dadurch gekennzeichnet**, daß drei der vier Verbindungen zwischen Grundkörper (1), erster (2) und zweiter (3) Stütze und Traverse (4) als drehbewegliche Verbindungen (14,21,31) ausgeführt sind, deren Drehachsen weitgehend senkrecht zur Ebene des von den vier Portalteilen (1,2,3,4) aufgespannten Vierecks (5) liegen und daß die vierte Verbindung (13) biegesteif ist.

2. Feststehendes Portal für ein Präzisions-Koordinatenmeßgerät nach Anspruch 1, **dadurch gekennzeichnet**, daß mindestens eine drehbewegliche Verbindung (14,21,31) durch ein elastisch verformbares Element realisiert ist.

3. Feststehendes Portal für ein Präzisions-Koordinatenmeßgerät nach Anspruch 2, **dadurch gekennzeichnet**, daß mindestens eine drehbewegliche Verbindung (14,21,31) als biegsame Laschenverbindung (22) ausgeführt ist.

4. Feststehendes Portal für ein Präzisions-Koordinatenmeßgerät nach Anspruch 1, **dadurch gekennzeichnet**, daß die Stützen (2,3) und/oder die Traverse (4) als Blechformteile ausgeführt sind.

5. Feststehendes Portal für ein Präzisions-Koordinatenmeßgerät nach Anspruch 1, **dadurch gekennzeichnet**, daß die biegesteife Verbindung (13) zwischen Grundkörper (1) und erster Stütze (2) angeordnet ist.

6. Feststehendes Portal für ein Präzisions-Koordinatenmeßgerät nach Anspruch 1, **dadurch gekennzeichnet**, daß eine drehbewegliche Verbindung (120,240) mehr als eine Drehachse aufweist.

7. Feststehendes Portal für ein Präzisions-Koordinatenmeßgerät nach Anspruch 1, **dadurch gekennzeichnet**, daß zwei der drehbeweglichen Verbindungen (120,240) als Kugelgelenke oder zweiachsige Drehgelenke ausgebildet sind.

8. Feststehendes Portal für ein Präzisions-Koordinatenmeßgerät nach Anspruch 1, **dadurch gekennzeichnet**, daß von Grundkörper (1), Stützen (2,3) und Traverse (4) mindestens ein Teil eine gebogene, gekröpfte oder geknickte Form aufweist.

9. Feststehendes Portal für ein Präzisions-Koordinatenmeßgerät nach Anspruch 1, **dadurch gekennzeichnet**, daß mindestens eine drehbewegliche Verbindung (240,340) in der Grundstellung einen von 90° wesentlich abweichenden Winkel zwischen den verbundenen Teilen (20,30,40) bildet.

## Claims

1. Stationary gantry for a precision co-ordinate measuring instrument with a base body (1), a first (2) and a second (3) support and a crossbeam (4), characterised thereby, that three of the four connections between the base body (1), the first (2) and the second (3) support and the crossbeam (4) are constructed as rotationally movable connections (14, 21, 31), the rotational axes of which lie to a large extent perpendicularly to the plane of the quadrilateral (5) spanned by the four gantry parts (1, 2, 3, 4) and that the fourth connection (13) is resistant to bending.

2. Stationary gantry for a precision co-ordinate measuring instrument according to claim 1, characterised thereby, that at least one rotationally movable connection (14, 21, 31) is realised by an elastically deformable element.

3. Stationary gantry for a precision co-ordinate measuring instrument according to claim 2, characterised thereby, that at least one rotationally movable connection (14, 21, 31) is constructed as flexible strap connection (22).

4. Stationary gantry for a precision co-ordinate measuring instrument according to claim 1, characterised thereby, that the supports (2, 3) and/or the crossbeam (4) are constructed as shaped sheet metal parts.

5. Stationary gantry for a precision co-ordinate measuring instrument according to claim 1, characterised thereby, that the connection (13), which is resistant to bending, is arranged between the base body (1) and the first support (1).

6. Stationary gantry for a precision co-ordinate measuring instrument according to claim 1, characterised thereby, that one rotationally movable connection (120, 140) displays more than rotational axis.

7. Stationary gantry for a precision co-ordinate measuring instrument according to claim 1, characterised thereby, that two of the rotationally movable connections (120, 140) are constructed as ball joints or bi-axial rotary joints.

8. Stationary gantry for a precision co-ordinate measuring instrument according to claim 1, characterised thereby, that at least one part of the base body (1), the supports (2, 3) and the crossbeam (4) displays a bent, offset or kinked shape.

9. Stationary gantry for a precision co-ordinate measuring instrument according to claim 1, characterised thereby, that at least one rotationally movable connection (240, 340) in the basic setting forms an angle differing substantially from 90° between the connected parts (20, 30, 40).

## Revendications

1. Portique fixe pour un appareil de mesure de coordonnées de haute précision comprenant un corps de base (1), un premier montant (2) et un deuxième montant (3) ainsi qu'une traverse (4), caractérisé en ce que trois des quatre liaisons entre le corps de base (1), les premier (2) et deuxième (3 ) montants et la traverse (4) sont réalisées sous forme de liaisons mobiles en rotation (14, 21, 31) dont les axes de rotation sont dans une large mesure perpendiculaires au plan du carré (5) établi par les quatre pièces de portique (1, 2, 3, 4) et que la quatrième liaison (13) est résistante à la flexion.

2. Portique fixe pour un appareil de mesure de coordonnées de haute précision selon la revendication 1, caractérisé en ce qu'on réalise au moins une liaison mobile en rotation (14, 21, 31) par un élément déformable élastiquement.

3. Portique fixe pour un appareil de mesure de coordonnées de haute précision selon la revendication 2, caractérisé en ce qu'au moins une liaison mobile en rotation (14, 21, 31) est réalisée comme liaison par attaches (22) flexible.

4. Portique fixe pour un appareil de mesure de coordonnées de haute précision selon la revendication 1, caractérisé en ce que les montants (2, 3) et/ou la traverse (4) sont réalisés comme pièces usinées en tôle.

5. Portique fixe pour un appareil de mesure de coordonnées de haute précision selon la revendication 1, caractérisé en ce que la liaison résistant à la flexion (13) est disposée entre le corps de base (1) et le premier montant (2).

6. Portique fixe pour un appareil de mesure de coordonnées de haute précision selon la revendication 1, caractérisé en ce que la liaison mobile en rotation (120, 240) présente plus d'un axe de rotation.

7. Portique fixe pour un appareil de mesure de coordonnées de haute précision selon la revendication 1, caractérisé en ce que deux des liaisons mobiles en rotation (120, 240) sont réalisées comme articulations sphériques ou articulations tournantes à deux axes.

8. Portique fixe pour un appareil de mesure de coordonnées de haute précision selon la revendication 1, caractérisé en ce que parmi le corps de base (1), les montants (2, 3) et la traverse (4), au moins une pièce présente une forme courbée, coudée ou pliée.

9. Portique fixe pour un appareil de mesure de coordonnées de haute précision selon la revendication 1, caractérisé en ce qu'au moins une liaison mobile en rotation (240, 340) présente dans la position de base un angle entre les pièces reliées (20, 30, 40) s'écartant de façon importante de 90°.
